# EUROPÄISCHE PATENTANMELDUNG

(11) **EP 1 237 361 A2**
(43) Veröffentlichungstag der Anmeldung: **04.09.2002**
(21) Anmeldenummer: 02100198.7
(22) Anmeldetag: 28.02.2002
(51) Int. Cl.: H04N 5/21

(54) **Einrichtung zur Rauschreduktion in Bildsignalen**

(30) Priorität: 01.03.2001 DE 10109968
(71) Anmelder: Philips Corporate Intellectual Property GmbH, 52066 Aachen (DE); Koninklijke Philips Electronics N.V., 5621 BA Eindhoven (NL)
(72) Erfinder: Wischermann, Gerhard, 52066, Aachen (DE)
(74) Vertreter: Volmer, Georg, Dipl.-Ing.

(57) **Zusammenfassung**

Bei einer Einrichtung zur Rauschreduktion in Bildsignalen werden die Bildsignale in mindestens einen örtlich niederfrequenten Spektralanteil und einen örtlich höherfrequenten Spektralanteil aufgespalten. Der höherfrequente Spektralanteil wird über ein zeitliches Filter geleitet. Das Ausgangssignal des zeitlichen Filters und der entsprechend verzögerte niederfrequente Spektralanteil werden zu einem rauschreduzierten Bildsignal addiert.

## Beschreibung

Die Erfindung betrifft eine Einrichtung zur Rauschreduktion in Bildsignalen.

Zur Rauschreduktion in Bildsignalen sind Einrichtungen mit zeitlichen Rekursivfiltern bekannt, beispielsweise durch DE 27 50 173 C2. Je höher dabei der Rückkopplungsfaktor ist, je besser ist die Rauschreduktion, weil dann letztendlich der Bildinhalt vieler Bilder gemittelt wird Bei bewegten Bildinhalten ist jedoch eine Integration von Bild zu Bild nur in Grenzen möglich, da ansonsten eine Unschärfe der bewegten Bildinhalte auftritt. Deshalb wird bei den bekannten Einrichtungen der Rückkopplungsfaktor in Abhängigkeit von einer Bewegung im Bild gesteuert. Die Bewegung wird durch die Bildung des Betrags der Differenzen der Bildsignale zweier aufeinanderfolgender Bilder ermittelt.

Bei den bekannten Verfahren geht man letztendlich davon aus, dass das Rauschen bei bewegten Bildinhalten nicht so störend wie bei ruhenden Bildinhalten ist. Dies ist insbesondere jedoch bei der Bewegung von großen flächigen Objekten nicht unbedingt der Fall.

Aufgabe ist es daher, eine Einrichtung zur Rauschreduktion in Bildsignalen anzugeben, welche auch bei vorliegenden Bewegungen eine Rauschreduktion vornimmt, ohne dass störende Artefakte in die Bildsignale geraten.

Diese Aufgabe wird erfindungsgemäß dadurch gelöst, dass die Bildsignale in mindestens einen örtlich niederfrequenten Spektralanteil und einen örtlich höherfrequenten Spektralanteil aufgespalten werden, dass der höherfrequente Spektralanteil über ein zeitliches Filter geleitet wird und dass das Ausgangssignal des zeitlichen Filters und der entsprechend verzögerte niederfrequente Spektralanteil zu einem rauschreduzierten Bildsignal addiert werden.

Die erfindungsgemäße Einrichtung hat den Vorteil, dass auch in bewegten Bildbereichen eine Rauschreduktion erzielt wird, ohne dass aufwendige Verfahren zur Bewegungsschätzung und Bewegungskompensation eingesetzt werden müssen. Ferner ist die erfindungsgemäße Einrichtung sehr robust gegenüber Film-Flacker-Störungen, da diese ausschließlich im Tiefpasskanal auftreten. Bei dem bekannten Verfahren zur Rauschreduktion erzeugen nämlich die niederfrequenten Film-Flacker-Störungen im Bewegungsdetektor des Rauschreduzierers einen erheblichen Ausschlag, was zu einem Ansprechen des Bewegungsdetektors führt und somit eine Rauschreduktion selbst bei unbewegten Bildern verhindert oder stark einschränkt.

Die erfindungsgemäße Einrichtung bietet die Möglichkeit, die Wirkung der Rauschreduktion auf eine maximal zu erwartende örtliche Ausdehnung der Störung zu begrenzen. Da beispielsweise das Filmkorn eines 35mm-Negativfilms wesentlich feiner ist als bei einem umkopierten Super-16mm-Film, kann die Apertur des FIR-Filters (Größe des Filterfensters) bei der Signalaufspaltung entsprechend verkleinert werden. Dies führt zu noch weniger Objekt-Nachbildungen im höherfrequenten Spektralanteil und verringert die Gefahr von Artefakten, wie beispielsweise Nachziehen oder Geisterbilder von bewegten Objekten.

Auch bei der erfindungsgemäßen Einrichtung können in dem höherfrequenten Spektralanteil vorliegende Bewegungen vorzugsweise dadurch ausgewertet werden, dass das zeitliche Filter ein Rekursivfilter ist, dessen Rückkopplungsfaktor von einem Bewegungsdetektor steuerbar ist, dem der höherfrequente Spektralanteil zuführbar ist. Es sind jedoch auch andere zeitliche Filter, wie zeitliche Transversal- und Medianfilter, anwendbar.

Eine vorteilhafte Ausgestaltung der Erfindung besteht darin, dass zur Ableitung des niederfrequenten Spektralanteils ein örtliches Tiefpassfilter der Größe von etwa 5x5 bis 11x11 Bildelementen vorgesehen ist und dass zur Ableitung des höherfrequenten Spektralanteils eine Subtraktion des niederfrequenten Spektralanteils von dem entsprechend der Filterlaufzeit verzögerten Bildsignal erfolgt.

Diese Ausgestaltung hat den Vorteil, dass das bei der Wiedergabe von Farbfilmen störende Korn in den höherfrequenten Spektralanteil fällt und somit der Rauschreduktion unterworfen wird Als örtliches Tiefpassfilter kann vorzugsweise ein FIR-Filter verwendet werden. Die Erfindung ist jedoch auch mit einem zweidimensionalen (horizontal/vertikal) Medianfilter durchfühlbar.

Mit der erfindungsgemäßen Einrichtung ist auch eine unterschiedliche Behandlung verschieden grober Rauschstrukturen (Kornstrukturen) möglich, wozu bei einer Weiterbildung vorgesehen ist, dass ferner ein mittlerer Spektralanteil des Bildsignals abgeleitet wird und dass der mittlere Spektralanteil über ein weiteres zeitliches Filter geleitet wird und dass das Ausgangssignal des weiteren zeitlichen Filters zum verzögerten niederfrequenten Spektralanteil und zum Ausgangssignal des zeitlichen Filters hinzuaddiert wird.

Diese Weiterbildung wird vorzugsweise derart ausgestaltet, dass das weitere zeitliche Filter ein weiteres Rekursivfilter ist, dessen Rückkopplungsfaktor von einem weiteren Bewegungsdetektor steuerbar ist, dem der mittlere Spektralanteil zufühlbar ist.

Da bei der Aufnahme von Filmen eine Integration des einfallenden Lichtes über jeweils eine Bildperiode stattfindet, werden die Kanten von bewegenden Objekten entsprechend unscharf verschliffen. Da in diesen Bildbereichen dann praktisch keine hohen Spektralanteile des Nutzsignals auftreten, kann mit einer anderen Weiterbildung der Erfindung das Rauschen in diesen Bildbereichen dadurch weiter reduziert werden, dass das Ausgangssignal des zeitlichen Filters und/oder das Ausgangssignal des weiteren zeitlichen Filters mit einem Bewegungssignal derart steuerbar ist, dass die Amplitude des Ausgangssignals mit zunehmender Bewegung verringert wird.

Dabei ist vorzugsweise vorgesehen, dass die Verringerung bei einem vorgegebenen Wert eines die Bewegung darstellenden Bewegungssignals einsetzt und bei größerem Bewegungssignal auf einen Mindestwert abfällt.

Ausführungsbeispiele der Erfindung sind in der Zeichnung anhand mehrerer Figuren jeweils als Blockschaltbild dargestellt und in der nachfolgenden Beschreibung näher erläutert. Es zeigt:
- Fig. 1: ein erstes Ausführungsbeispiel,
- Fig. 2: einen bekannten Rauschreduzierer zur Verwendung bei der erfindungsgemäßen Einrichtung,
- Fig. 3: ein zweites Ausführungsbeispiel und
- Fig. 4: ein drittes Ausführungsbeispiel.

Die Darstellung als Blockschaltbild besagt nicht, dass die einzelnen Funktionen tatsächlich in einzelnen Schaltungen durchgeführt werden. Es ist vielmehr die Anwendung von programmierbaren Prozessoren zur Durchführung der Berechnungen möglich und vorteilhaft.

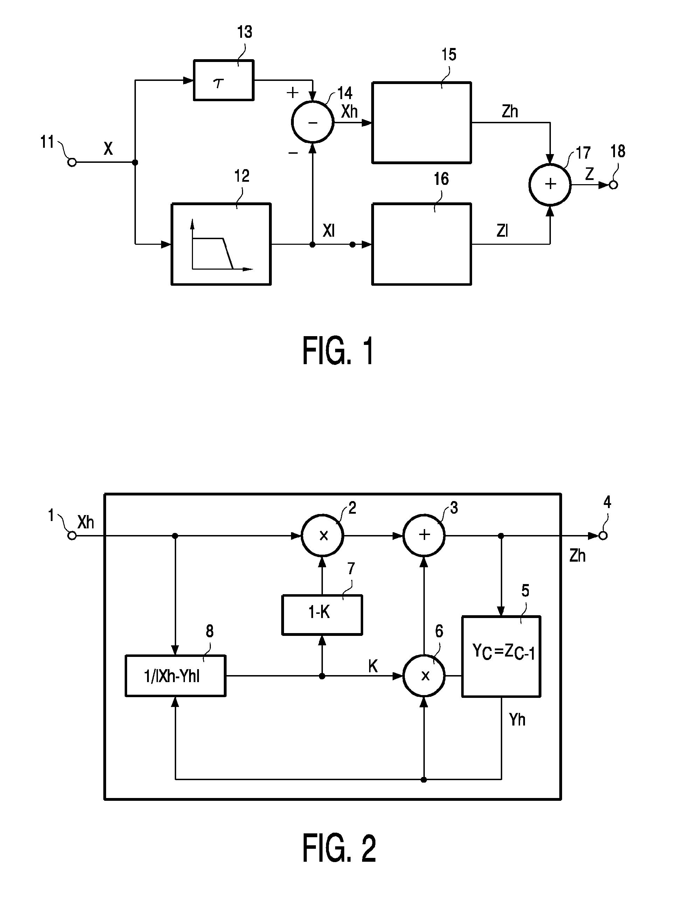

Vor der Erklärung der einzelnen Ausführungsbeispiele wird der an sich bekannte Rauschreduzierer nach Fig. 2 erläutert, wie er in den Ausführungsbeispielen angewendet wird.

Über einen Eingang 1 wird der höherfrequente Spektralanteil Xh zugeführt. Er gelangt über einen Multiplizierer 2 und einen Addierer 3 als Anteil Zh zum Ausgang 4. Zh wird einem Bildspeicher 5 zugeleitet und um eine Bildperiode verzögert aus dem Bildspeicher als Signal Yh ausgelesen. Das Signal Yh wird über einen zweiten Multiplizierer 6 dem Addierer 3 zugeführt. Dem Multiplizierer 6 wird der Rückkopplungsfaktor K und dem Multiplizierer 2 über eine Schaltung 7 ein Faktor 1-K zugeführt.

Insoweit enthält die Einrichtung nach Fig. 2 ein bekanntes Rekursivfilter. Ist K=0, wird Xh unverändert zum Ausgang 4 weitergeleitet. Es findet bei K=0 keine Rauschreduktion statt. Mit größer werdendem K, wird auch der Anteil des aus dem Bildspeicher 5 ausgelesenen Signals Yh am Ausgangssignal Zh größer. Bei K=1 wird nur noch das gespeicherte Signal Yh ausgelesen und wieder eingeschrieben. Aus Stabilitätsgründen wird der Maximalwert von K etwas unter 1 gehalten. Es findet dann eine Mittelwertbildung aufeinanderfolgender Bilder im Bildspeicher 5 statt, so dass statistische Störungen (Rauschen) reduziert werden.

Der Rückkopplungsfaktor K wird bei dem Rauschreduzierer nach Fig. 2 dadurch abgeleitet, dass bei 8 der Betrag der Differenz des jeweils zugeführten Signals Xh und des Signals Yh gebildet wird.

Bei dem Ausführungsbeispiel nach Fig. 1 wird das Bildsignal X von einem Eingang 11 einem örtlichen Tiefpassfilter 12 und einem Verzögerungsglied 13 zugeführt. Das Tiefpassfilter 12 ist vorzugsweise ein FIR-Filter und erfasst beispielsweise fünf aufeinanderfolgende Bildelemente in fünf Zeilen. Der niederfrequente Spektralanteil Xl und das entsprechend bei 13 verzögerte Bildsignal X werden bei 14 subtrahiert, so dass der höherfrequente Spektralanteil Xh entsteht, der einem Rauschreduzierer 15, der schematisch in Fig. 2 dargestellt ist, zugeführt wird.

In dem Zweig für die niederfrequenten Spektralanteile Xl ist eine Verzögerungseinrichtung 16 angeordnet. Anstelle dieser Verzögerungseinrichtung können jedoch auch Signalverarbeitungsschaltungen eingefügt werden, welche sich lediglich auf den niederfrequenten Spektralanteil auswirken sollen, beispielsweise eine Schaltungsanordnung zur Reduktion von niederfrequenten Flackerstörungen. Die Spektralanteile Zh und Zl werden dann bei 17 addiert und können als rauschreduziertes Bildsignal Z einem Ausgang 18 entnommen werden.

Die höherfrequenten Spektralanteile Xh beinhalten den kompletten Störanteil (Rauschen) sowie die feinen Bilddetails. Bei dem bekannten Rauschreduktionsverfahren, das auf das vollständige Bildsignal wirkt, entstehen beispielsweise an Vorder- und Hinterkanten der bewegten Objekte große Differenzsignale (X-Y), so dass der Rückkopplungsfaktor K praktisch zu Null wird, was im Sinne der Behinderung von Bewegungsnachziehen zwar positiv ist, jedoch in diesen Bildbereichen nicht reduziertes Rauschen bedeutet.

Bei der erfindungsgemäßen Einrichtung wird - wie bereits erläutert - lediglich der höherfrequente Spektralanteil des Bildsignals der Rauschreduktion unterworfen. Dementsprechend wird auch nur die Differenz der höherfrequenten Spektralanteile gebildet. Da diese jedoch nur die feinen Bilddetails beinhalten, tritt das angenommene größere Objekt hierbei nicht auf. Folglich ergeben sich in dem Signal K auch wesentlich geringere Amplitudenausschläge, so dass die Rauschreduktion an den Kanten bewegter Objekte erhalten bleibt.

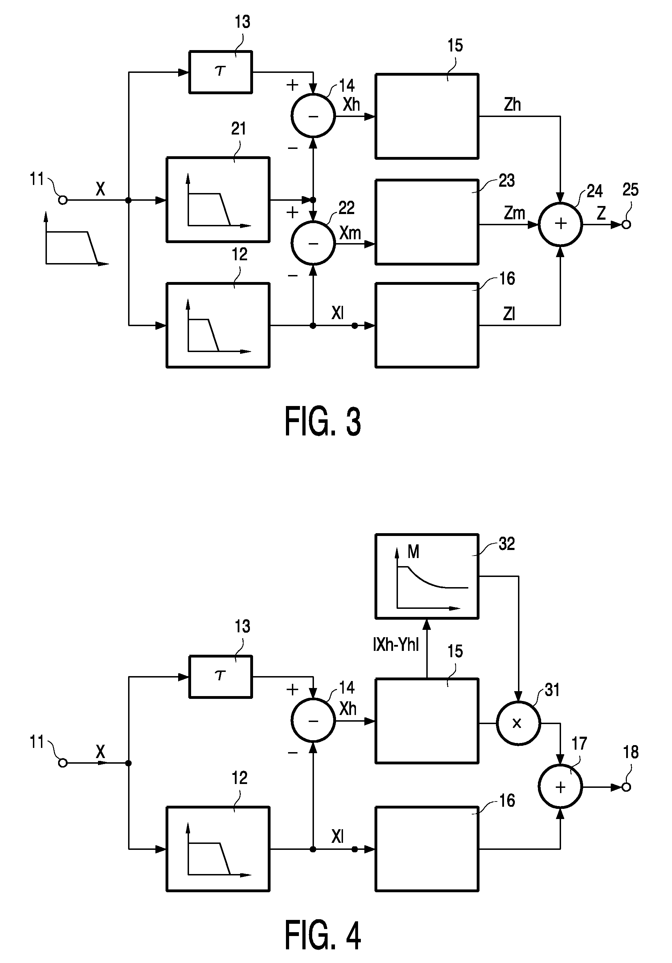

Bei dem Ausrührungsbeispiel nach Fig. 3 ist ein weiteres Tiefpassfilter 21 mit einer höheren Grenzfrequenz als das Tiefpassfilter 12 vorgesehen mit einer weiteren Subtraktionsschaltung 22, so dass insgesamt Spektralanteile Xh, Xm und Xl entstehen. Für die mittleren Spektralanteile Xm ist ein separater Rauschreduzierer 23 vorgesehen, der ähnlich demjenigen nach Fig. 2 aufgebaut ist. Die Addierschaltung 24 verfügt dann über drei Eingänge. Das Signal Z kann dem Ausgang 25 entnommen werden.

Mit der Einrichtung nach Fig. 3 kann durch die Wahl der Filterfenster und gegebenenfalls durch Einstellung der Rauschreduzierer 16, 23 der Charakter der Rauschreduzierung insgesamt individuellen Forderungen angepasst werden. So kann beispielsweise in einem der Spektralbereiche h oder m eine stärkere Rauschreduktion als in dem anderen vorgenommen werden, um einen bestimmten künstlerischen Eindruck hervorzurufen - beispielsweise sogenanntes Cinema-Feeling.

Fig. 4 zeigt ein Ausführungsbeispiel, bei welchem der rauschreduzierte höherfrequente Spektralanteil über einen Multiplizierer 31 dem Addierer 17 zugeleitet wird. Der Multiplizierer wird von einem Faktor M gesteuert, der den höherfrequenten Spektralanteil abschwächt, wenn der Bewegungsdetektor des Rekursivfilters einen vorgegebenen Wert, der oberhalb der Rauschschwelle liegt, anzeigt. Dazu wird dem Rauschreduzierer 15 das die Bewegung darstellende Differenzsignal |Xh-Yh| entnommen und einer sogenannten Look-up-table 32 zugeführt, in welcher die Abhängigkeit des Faktors M von dem Bewegungssignal abgelegt ist. Der Faktor M ist bei Bewegung unterhalb des vorgegebenen Wertes 1 und nimmt dann beispielsweise mit einer Hyperbelfunktion auf einen Wert 0,5 bei starker Bewegung ab.

## Patentansprüche

1. Einrichtung zur Rauschreduktion in Bildsignalen,
**dadurch gekennzeichnet,**
**dass** die Bildsignale in mindestens einen örtlich niederfrequenten Spektralanteil und einen örtlich höherfrequenten Spektralanteil aufgespalten werden, dass der höherfrequente Spektralanteil über ein zeitliches Filter (15) geleitet wird und dass das Ausgangssignal des zeitlichen Filters (15) und der entsprechend verzögerte niederfrequente Spektralanteil zu einem rauschreduzierten Bildsignal addiert werden.

2. Einrichtung nach Anspruch 1,
**dadurch gekennzeichnet,**
**dass** das zeitliche Filter (15) ein Rekursivfilter ist, dessen Rückkopplungsfaktor von einem Bewegungsdetektor (8) steuerbar ist, dem der höherfrequente Spektralanteil zuführbar ist.

3. Einrichtung nach einem der Ansprüche 1 oder 2,
**dadurch gekennzeichnet,**
**dass** zur Ableitung des niederfrequenten Spektralanteils ein örtliches Tiefpassfilter (12) der Größe von etwa 5x5 bis 11x11 Bildelementen vorgesehen ist und dass zur Ableitung des höherfrequenten Spektralanteils eine Subtraktion des niederfrequenten Spektralanteils von dem entsprechend der Filterlaufzeit verzögerten Bildsignal erfolgt.

4. Einrichtung nach einem der vorhergehenden Ansprüche,
**dadurch gekennzeichnet,**
**dass** ferner ein mittlerer Spektralanteil des Bildsignals abgeleitet wird und dass der mittlere Spektralanteil über ein weiteres zeitliches Filter (23) geleitet wird und dass das Ausgangssignal des weiteren zeitlichen Filters (23) zum verzögerten niederfrequenten Spektralanteil und zum Ausgangssignal des zeitlichen Filters (15) hinzuaddiert wird.

5. Einrichtung nach Anspruch 4,
**dadurch gekennzeichnet,**
**dass** das weitere zeitliche Filter (23) ein weiteres Rekursivfilter ist, dessen Rückkopplungsfaktor von einem weiteren Bewegungsdetektor steuerbar ist, dem der mittlere Spektralanteil zuführbar ist.

6. Einrichtung nach einem der vorhergehenden Ansprüche,
**dadurch gekennzeichnet,**
**dass** das Ausgangssignal des zeitlichen Filters (15) und/oder das Ausgangssignal des weiteren zeitlichen Filters (23) mit einem Bewegungssignal derart steuerbar ist, dass die Amplitude des Ausgangssignals mit zunehmender Bewegung verringert wird.

7. Einrichtung nach Anspruch 6,
**dadurch gekennzeichnet,**
**dass** die Verringerung bei einem vorgegebenen Wert eines die Bewegung darstellenden Bewegungssignals einsetzt und bei größerem Bewegungssignal auf einen Mindestwert abfällt.
